Europäisches Patentamt

European Patent Office

Office européen des brevets

(11) Publication number: **0 223 849**
**B1**

# EUROPEAN PATENT SPECIFICATION

(45) Date of publication of patent specification: **26.09.90**

(21) Application number: **86904025.3**

(22) Date of filing: **29.07.85**

(86) International application number:
**PCT/US85/01435**

(87) International publication number:
**WO 86/07174 04.12.86 Gazette 86/26**

(51) Int. Cl.⁵: **G 06 F 15/76**

(54) **SUPER-COMPUTER SYSTEM ARCHITECTURES.**

(30) Priority: **20.05.85 US 735641**

(43) Date of publication of application:
**03.06.87 Bulletin 87/23**

(45) Publication of the grant of the patent:
**26.09.90 Bulletin 90/39**

(84) Designated Contracting States:
**DE FR GB**

(56) References cited:
**EP-A-0 077 404**
**EP-A-0 121 763**
**DE-A-2 425 380**
**US-A-3 308 436**

**Proceedings of the 1983 International
Conference on Parallel Processing 23-26 August
1983, IEEE (New York, US) G. Fritsch et al.:
"EMSY 85 The Erlangen multiprocessor system
for a broad spectrum of applications", pages
325-330, see page 326, lefthand column**

(73) Proprietor: **SHEKELS, Howard D.**
**8619 N. Cardinal Drive**
**Phoenix, AZ 85028 (US)**

(72) Inventor: **SHEKELS, Howard D.**
**8619 N. Cardinal Drive**
**Phoenix, AZ 85028 (US)**

(74) Representative: **Coxon, Philip et al
Eric Potter & Clarkson St. Mary's Court St.
Mary's Gate
Nottingham NG1 1LE (GB)**

Courier Press, Leamington Spa, England.

**Description**

This invention relates to data processing systems and, more particularly, to computer system architectures which are especially applicable to large scale, powerful systems.

Some current and many contemplated applications for large scale, powerful computer systems require tremendous capabilities for computation which continue to push the state of the art in the field for current applications and which far exceed the state of the art for contemplated applications. The performance of computer systems has generally been evolutionary in that the fundamental architecture has remained in a traditional configuration (sometimes called "Von Neumann") involving the sequential execution of instructions which individually are rigidly defined. Even such techniques as parallel processing typically involve arrays of traditionally configured processors functioning under the coordination of a master processor. Virtually all known present and contemplated (insofar as they are disclosed in the literature) system architectures can be analyzed and identified as Von Neumann variations.

One of the present trends for computer system architectures is toward very fast processors having relatively limited command structures. Thus, it is not unlikely that most future computers will be more elementary than those in current use, but will be ultrafast. One significant drawback for this possible evolutionary path is that more and more of the "responsibility" for system performance falls on the software, and it is the experience of the industry that the performance of many fine computer systems remains software limited. That is, the ultimate performance of the systems are limited by inefficiencies which are simply unavoidable in all but very short programs written in machine language.

Many future applications, such as in artificial intelligence, advanced space technology and the like, impose computational requirements which exceed the ability of traditional Von Neumann systems, no matter how closely the theoretical speed limits are approached, and no matter how configured or arrayed.

Thus, it will be appreciated by those skilled in the art that the fundamental architectural approach for large scale, powerful systems must be rethought if demanding future applications are to be dealt with. It will therefore be commensurately appreciated by those skilled in the art that it would be highly desirable to provide a new architectural structure by the use of which the fundamental and inherent limits of conventional computer systems may be avoided.

In EP-A-0121763 there is disclosed a system in which the computer instruction set can be modified by stored program control.

In DE-A-2425380 there is disclosed a computer system architecture which describes the features of the precharacterising clause of Claim 1.

According to one aspect of the invention there is provided a data processing system including:

(A) a program control computer, said program control computer including instruction execution coordinating means for identifying each instruction in an instruction set of said program control computer as a program is executed;

(B) a bank of instruction computers, each instruction computer in said bank being assigned to execute one instruction in the instruction set of said program control computer;

(C) coupling means linking said program control computer and each instruction computer in said bank for communication therebetween;

Characterised in that

(D) said instruction execution co-ordinating means included in said program control computer is adapted to transfer an initiate execution signal representing an identified instruction to the one of said instruction computers which has been assigned to execute the identified instruction in the instruction set of said program control computer; and

(E) programmable instruction decoding means is included in at least one of said instruction computers for receiving an initiate execution signal representing an identified instruction in the instruction set of said program control computer and for responding thereto by generating microtask signals representative of the tasks required for executing the instruction, said programmable instruction decoding means being further adapted to respond to instruction modification signals applied thereto by changing the microtask signals generated thereby in response to said initiate execution signal.

According to another aspect of the invention there is provided a data processing system including:

(A) a plurality of program control computers, each said program control computer including instruction executing co-ordinating means for identifying each instruction in an instruction set of said program control computer as a program is executed;

(B) a supervisory computer;

(C) a plurality of instruction computer banks, each said instruction computer bank comprising a plurality of instruction computers, each instruction computer in each said bank being assigned to execute one instruction in the instruction set of at least one of said program control computers;

(D) a plurality of system memories;

(E) a bus system coupling said program control computers, said supervisory computer, said system memories and said instruction computers for communication thereamong;

(F) said instruction executing coordinating means included in a given one of said program control computers being adapted to transfer an initiate execution signal representing an identified instruction to the one of said instructions computers which has been assigned to execute the identified instruction in the instruction set of said given one of said program control computers; and

(G) programmable instruction decoding means included in each of said instruction computers for receiving said initiate execution signal representing an identified instruction in the instruction set of said given one of said program control computers to be executed and for responding thereto by generating microtask signals representative of the tasks required for executing the instruction, said programmable instruction decoding means being further adapted to respond to instruction modification signals applied thereto by changing the microtask signals generated thereby in response to said initiate execution signal.

The subject matter of the invention is particularly pointed out and distinctly claimed in the concluding portion of the specification. The invention, however, both as to organization and method of operation, may best be understood by reference to the following description taken in conjunction with the subjoined claims and the accompanying drawing of which:

Fig. 1 is a major block diagram of an exemplary computer system employing the present architecture;

Fig. 2 is a more detailed block diagram of the system of Fig. 1; and

Fig. 3 illustrates the extension of the system of Figs. 1 and 2 into multi-level two-dimensional arrays and three-dimensional arrays of multi-level systems.

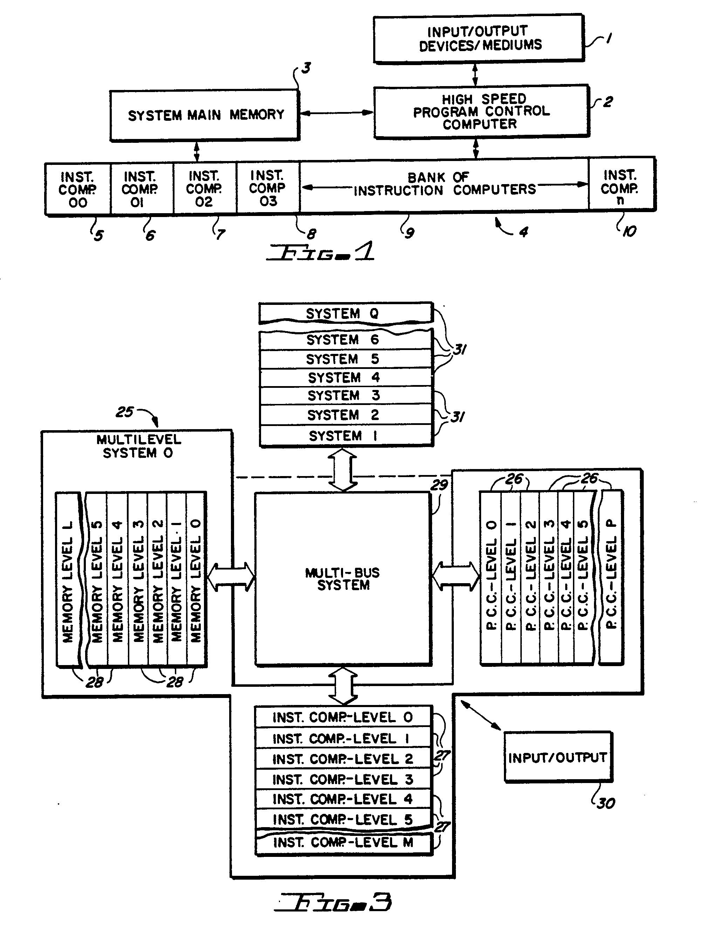

The major block diagram of Fig. 1 illustrates a fundamental aspect of the present invention which sets it apart from prior art data processing system architectures. The system of Fig. 1 includes any suitable aggregation of input/output devices and mediums 1 in communication with a high speed program control computer 2. Also in communication with program control computer 2 is a system main memory 3 which may consist of any assemblage of memory storage means appropriate to a given system application. Both the high speed program control computer 2 and the system main memory 3 are in communication with a bank of instruction computers 4. As few as one instruction computers could comprise the bank 4, but efficient embodiments of the invention preferably include at least as many instruction computers in the bank 4 as there are instructions in the repertoire of the high speed program control computer 2. Thus, the bank of instruction computers 4 illustratively include instruction computer (00) 5, instruction computer (01) 6, instruction computer (02) 7, instruction computer (03) 8, an indeterminate number of instruction computers 9 and instruction computer (n) 10 which represents the final instruction computer in the illustrative bank 4.

It will be understood that the high speed program control computer 2 does not itself execute all the instructions in a program executed by the system, but rather assigns the execution of each instruction in its instruction set to one instruction computer among the bank 4. Merely by way of elementary example, if the instruction "00" in the repertoire of the high speed program control computer 2 is "add one to operand", the program control computer 2 may issue the operand to instruction computer 00 5 along with a signal advising the instruction computer 00 to A) initiate instruction execution, B) advise the high speed program control computer 2 when execution of the instruction has been completed (or some meaningful intermediate result has been obtained), and C) return the result to the high speed control computer 2. Other instructions in the repertoire of the high speed program control computer 2 may be executed (serially, in parallel, or both) by the instruction computers comprising the bank 4.

A second fundamental aspect of the architecture of the system comprising the present invention is that, as will be discussed more fully below, means are included in each instruction computer in the bank 4 for altering the meaning and consequent execution of an instruction to be performed (or being performed) by an instruction computer. Thus, returning to the elementary example given above, the instruction "00", which would ordinarily be assigned for execution to instruction computer (00) 5, might have evolved within the instruction computer "00" from an "add one to the operand" to something very much more complex (still by way of example: a macro-instruction such as "find the prime numbers falling between limits a and c") which would better serve performance of the program segment under immediate execution, and the change might be effected within the instruction computer (00) either before or during instruction execution. The source for directing the change in the execution of an instruction may originate from the system program being performed, from human intervention as through an operators' console or from within the assigned instruction computer itself, as through interpretation of intermediate results. Thus, the instruction "00" might be further refined, between executions or during a single execution from intermediate results, to "find the second prime number between the limits b and c, a < b < c". Thereafter, when the instruction "00" is sensed during execution of a program by the high speed program control computer 2, that instruction will be so executed until again revised or reinitialized.

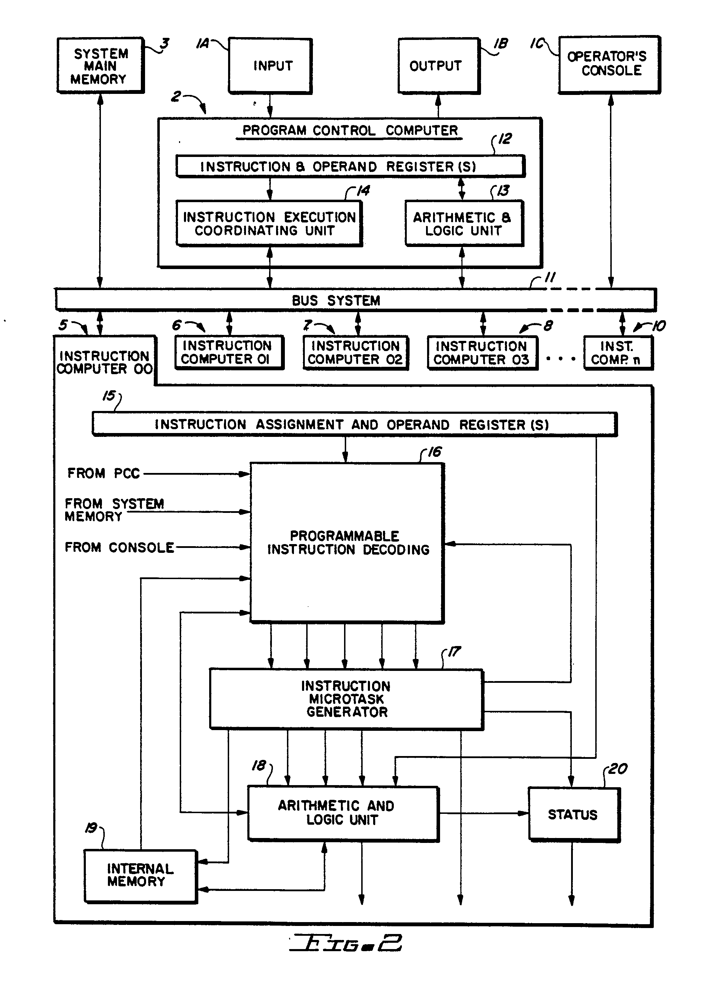

Fig. 2 is a more detailed block diagram of the system illustrated in Fig. 1. In Fig. 2, the input/output block has been separated into input 1a, output 1b, and operators' console 1c. The program control computer 2, the system main memory 3 and the illustrated instruction computers 5, 6, 7, 8, and 10 from the bank are all coupled for mutual communication through a comprehensive bus system 11. The operators' console 1c also has access to the bus system 11, and it is contemplated that some embodiments of the invention would be most efficient if the input sub-system 1a and output sub-system 1b had direct access to the bus system 11. The input 1a and the output 1b sub-systems are not of direct import to the fundamental aspects of the present invention and are therefore shown in Fig. 2 as communicating only with the program control computer 2.

High speed program control computer 2 includes instruction and operand register(s) 12 for receiving and temporarily storing instructions and any associated operands from, for example, the system main memory 3. An arithmetic and logic unit 13 in the program control computer 2 communicates with the instruction and operand registers 12, the bus system 11, and an instruction execution coordinating unit 14 which performs supervisory functions pertaining to execution instruction within the system. The instruction execution coordinating unit 14 also accesses the bus system 11 and serves to continually monitor and regulate the relationship between the program control computer 2 and the instruction computers. The instruction execution co-ordinating unit 14, upon determining the identification of an instruction to be executed in accordance with the currently running program, determines the specific instruction computer to which that instruction is currently assigned for execution, determines the status (i.e., availability or potential availability) of the assigned instruction computer and, when appropriate, causes an indication that the instruction computer is to commence its execution function operating on such operand information as may be supplied to it via the bus system 11, as may be available from the results of previous execution(s) or both.

The instruction computers comprising the instruction computer bank are, for most contemplated applications, preferably essentially identical to one another; however, this is not a constraint on the inventive system architecture, and it is further contemplated that a hierarchy of instruction computers of differing power may be more appropriate for certain system applications.

Thus, instruction computer (00) 5 includes instruction assignment and operand register(s) 15 for receiving and temporarily storing the information necessary to execute the instruction for which instruction computer (00) 5 is directed and set up to perform. On commencement of execution, a programmable instruction decoding unit 16 is activated and issues signals to instruction microtask generator unit 17. The information contained in the signals applied to the instruction microtask generator unit 17 from the programmable instruction decoding unit 16 depends upon the current decoding configuration of the latter. The instruction microtask generator unit 17 responds to the applied signals by issuing signals representing the microtasks which must be performed in the system to execute the instruction assigned to the instruction computer (00) 5 as currently interpreted by programmable instruction decoding unit 16 in instruction computer (00). These microtask signals are applied, as may be appropriate, to an arithmetic and logic unit 18 in the instruction computer 5, an internal memory 19 in the instruction computer, a status unit 20 in the instruction computer and back to the programmable instruction decoding unit 16 in the instruction computer. Such microtasks, if any, as may be necessary for performance outside the instruction computer 5 to complete instruction execution are issued to the bus system 11 and communicated to their destination. Preferably, each instruction computer in the bank is capable of generating a comprehensive set of microtask signals to effect any data manipulation of which the system is capable. Thus, each instruction computer has the inherent ability to perform powerful macro-instructions which may evolve therein.

Arithmetic and logic unit 18, internal memory 19, and programmable instruction decoding unit 16 may all communicate among one another. The arithmetic and logic unit 18 also receives operand information from the instruction assignment and operand register(s) 15, issues signals to the status unit 20 and also is capable of placing information on the bus system 11 for destinations external to the instruction computer 5.

A primary feature of the programmable instruction decoding unit 16 is its programmability. That is, it may be reconfigured to issue a different set of signals to the instruction microtask generator unit 17 whereby a given instruction may be interpreted and executed differently during different instruction cycles. Thus, a programmable instruction decoding unit 16 may be reconfigured under the influence, separately or in conjunction with one another, of external signals from the program control computer, system memory, or from the console under the influence of a programmer. From internal sources, the programmable instruction decoding unit 16 may be reconfigured by signals from the arithmetic and logic unit 18, internal memory 19, and the instruction microtask generator 17.

It will therefore be understood that the actual interpretation and execution of an instruction received by an instruction computer may be varied from execution cycle to execution cycle and, further, that its configuration can be modified during a single execution cycle as a result of the interpretation of intermediate results or for other reasons which render the "adaptation" of the precise execution of the instruction to be desirable.

The significance of the system architecture presented herein will now become more apparent to those skilled in the art. By this system architecture, not only can the system, as a whole, "learn" to execute a program more efficiently, but the instructions themselves can be adapted between successive executions and even during execution. Because of this ability to learn and adapt, the spread of system responsibility between software and hardware can be optimized; i.e., the system becomes less software-bound since the software need not be as complex and detailed as with traditional high speed computer systems in which the "definition" of individual instructions remains fixed or only slightly modifiable within strict and predetermined limits.

The actual logical design of several constituents of the system illustrated in Fig. 1 and 2, particularly those of the program control computer 2 and the instruction computers in the bank 4 as exemplified by the instruction computer 5, straightforwardly follow their function and can be carried out according to conventional techniques. It may be noted that the operating systems employed, respectively, in the program control computer 2 and in the instruction computers need not necessarily be the same. An instruction computer need only be furnished with operand-like information if necessary, instruction modification information if applicable, and an indication that it is to commence undertaking its internally defined and adaptable instruction sequence and have the results available when completed (or at an intermediate point) as indicated by the status unit 20. Therefore, the instruction computers, operating at a different level from the program control computer, are somewhat independent and can use an operating system optimum for their structure as chosen by the logic and circuit designers.

Communication (over the bus system 11 and otherwise such as in dedicated channels) between the various system constituents may be performed in parallel, in series or in a combination series/parallel manner as, again, the detailed design of an individual system may prescribe.

The system shown in Fig. 2 is essentially unidimensional in that there is shown only a single program control computer, a single bank of instruction computers, and a single level of main memory and input/output. However, the system architecture is especially well adapted for integration into very large scale two-dimensional and three-dimensional supersystems particularly including those subject to reconfiguration under program control. Referring now to Fig. 3, representations of such supersystems employing extensions of the architecture of the present invention are presented. It will be seen in Fig. 3 that multi-level system (0) 25 comprises a series of program control computers 26 disposed in levels 0—p. Similarly, a series of instruction computer banks 27 are disposed at levels 0—m and a series of system memories 28 are disposed at levels 0—1. (Thus, each level of the multi-level system 25 comprises much of the structure illustrated in Fig. 2.) Communication both within a level and among different system levels may be carried out across a three-dimensional multi-bus system 29. Input/output 30 may be coupled into the system at one or more levels, typically interfacing either with the multi-bus system 29 or one or more program control computers.

The two-dimensional supersystem comprising multilevel system 0 may be further extended by interfacing the multi-bus system 29 with additional multi-level systems 1—q 31. It will be apparent that, under program control, the instruction computers at different levels in multilevel system (0) 25 can be accessed by the program control computers 26 and memories 28 at diverse levels in order to achieve not only redundancy, but the ability to adapt to a complex problem virtually to the extent of realizing the equivalent of a hard-wired, completely special purpose system. The provision of additional multi-level systems 31, within practical limits, further extends the system power to adapt.

In a multi-level system, one program control computer must generally be dominant in order to direct system reconfiguration as may be useful and to resolve conflicts which may arise from, for example, attempts by multiple program control computers to access a given instruction computer. Similarly, in a three-dimensional system including a plurality of multi-level systems, a hierarchy must be established, and a single program control computer will be the ultimate arbiter.

Referring again to Fig. 2, it will be noted that system initialization is a substantial event because each of the instruction computers must be made aware of its initial instruction decoding configuration. Initialization may be performed by running, in the program control computer 2, an initialization program which assigns to each instruction computer in the instruction computer bank its beginning instruction sequence. Alternatively, an initialization signal may be applied to each instruction computer which has permanently stored therein (as in internal memory 19) the key to its initial instruction decoding. For achieving the most flexibility and for providing redundant capability against the failure of one or more instruction computers, the former procedure is preferred.

As previously noted, the logical design of individual computer systems employing the novel architecture set forth herein is susceptible to performance using standard techniques and will vary according to the system size, intended application, logic family chosen, etc.

**Claims**

1. A data processing system including:

(A) a program control computer (2), said program control computer (2) including instruction execution co-ordinating means (14) for identifying each instruction in an instruction set of said program control computer (2) as a program is executed;

(B) a bank (4) of instruction computers (5, 6, 7, 8, 10), each instruction computer in said bank (4) being assigned to execute one instruction in the instruction set of said program control computer (2);

(C) coupling means (11) linking said program control computer (2) and each instruction computer in said bank (4) for communication therebetween;

Characterised in that

(D) said instruction execution co-ordinating means (14) included in said program control computer (2) is adapted to transfer an initiate execution signal representing an identified instruction to the one of said instruction computers which has been assigned to execute the identified instruction in the instruction set of said program control computer (2); and

(E) programmable instruction decoding means (16) is included in at least one of said instruction computers for receiving an initiate execution signal representing an identified instruction in the instruction set of said program control computer (2) and for responding thereto by generating microtask signals representative of the tasks required for executing the instruction, said programmable instruction decoding means (16) being further adapted to respond to instruction modification signals applied thereto by changing the microtask signals generated thereby in response to said initiate execution signal.

2. A data processing system according to Claim 1 characterised in that each unique instruction in the instruction set of said program control computer (2) is assigned to an instruction computer in said bank (4) and in which each said instruction computer in said bank (4) includes programmable instruction decoding means (16) for receiving said initiate execution signal representing said assigned unique instruction and for responding thereto by generating microtask signals representing the tasks required for executing said assigned unique instruction, each said programmable instruction decoding means (16) being further adapted to respond to instruction modification signals applied thereto by changing the microtask signals generated thereby in response to said initiate execution signal.

3. A data processing system according to Claim 1 or 2 characterised in that said program control computer (2) includes means responsive to system initialization for generating a group of predetermined instruction modification signal sets and for transferring a predetermined one of said instruction modification signal sets to said programmable instruction decoding means (16) in each said instruction computer in said bank (4) to establish initial microtask signals which will be generated thereby in response to said initiate execution signal representing said unique instruction assigned to each said instruction computer.

4. A data processing system according to Claim 1, 2 or 3 characterised in that each said instruction computer includes feedback means for selectively responding to intermediate results obtained during the execution of an instruction for issuing instruction modification signals to said programmable instruction decoding means (16) included therein whereby microtask signals generated by said programmable instruction decoding means (16) in response to said initiate execution signal are changed during instruction execution.

5. A data processing system according to any of Claims 1 to 4 characterised by a main system memory (3), in which said coupling means (11) comprises a bus system and in which said program control computer (2), said main system memory (3), and each of said instruction computers have access to said bus system (11) for communication thereamong.

6. A data processing system including:

(A) a plurality of program control computers (26), each said program control computer (26) including instruction executing co-ordinating means for identifying each instruction in an instruction set of said program control computer as a program is executed;

(B) a supervisory computer;

(C) a plurality of instruction computer banks (27), each said instruction computer bank (27) comprising a plurality of instruction computers, each instruction computer in each said bank (27) being assigned to execute one instruction in the instruction set of at least one of said program control computers (26);

(D) a plurality of system memories (28);

(E) a bus system (29) coupling said program control computers (26), said supervisory computer, said system memories and said instruction computers for communication thereamong;

(F) said instruction executing co-ordinating means included in a given one of said program control computers (26) being adapted to transfer an initiate execution signal representing an identified instruction to the one of said instruction computers which has been assigned to execute the identified instruction in the instruction set of said given one of said program control computers (26); and

(G) programmable instruction decoding means included in each of said instruction computers for receiving said initiate execution signal representing an identified instruction in the instruction set of said given one of said program control computers (26) to be executed and for responding thereto by generating microtask signals representative of the tasks required for executing the instruction, said programmable instruction decoding means being further adapted to respond to instruction modification signals applied thereto by changing the microtask signals generated thereby in response to said initiate execution signal.

7. A data processing system according to Claim 6 characterised in that said supervisory computer is a selected one of said program control computers (26).

8. A data processing system according to Claim 6 or 7 characterised in that each said instruction computer includes feedback means for selectively responding to intermediate results obtained during the execution of an instruction for issuing instruction modification signals to said programmable instruction decoding means included therein whereby microtask signals generated by said programmable instruction decoding means in response to said initiate execution signal are changed during instruction execution.

**Patentansprüche**

1. Datenverarbeitungssystem mit folgenden Merkmalen:

(A) mit einem Programm-Steuercomputer (2), der Einheiten (14) zum Koordinieren und Ausführen von Befehlen während eines Programmablaufs durch Erkennung jedes Befehls in einer Befehlsfolge dieses Programm-Steuercomputers (2) aufweist;

(B) mit einer Reihe (4) von nachgeschalteten Befehlscomputern (5, 6, 7, 8, 10), wobei jeder Befehlscomputer in der Reihe (4) so ausgebildet ist, daß er einen Befehl in der Befehlsfolge des Programm-Steuercomputers (2) auszuführen in der Lage ist;

(C) mit Verbindungen (11), die die Kommunikation zwischen dem Programm-Steuercomputer (2) und jedem Befehlscomputer in der Reihe (4) herstellen;

gekennzeichnet durch folgende Merkmale:

(D) die Einheit (14) zum Koordinieren und Ausführen von Befehlen, die in dem Programm-Steuercomputer (2) angeordnet ist, ist so ausgebildet, daß sie ein Initialisierungs-Ausführungssignal, welches durch einen erkannten Befehl ausgelöst wird, zu einem dieser Befehlscomputer sendet, der bestimmt wurde, diesen erkannten Befehl aus der Befehlsfolge des Programm-Steuercomputers (2) auszuführen;

(E) mindestens einer der Befehlscomputer weist eine programmierbare Befehls-Dekodierungs (16) zum Empfangs eines Initialisierungs-Ausführungssignals, welches durch einen erkannten Befehl in der Befehlsfolge des Programm-Steuercomputers (2) ausgelöst wird, und zur Beantwortung durch Erzeugung von Mikrotask-Signalen auf, wobei die Mikrotask-Signale die Tasks einleiten, die zur Ausführung eines Befehls benötigt werden; die programmierbare Befehls-Dekodierungseinheit (16) ist weiterhin zum Antworten auf Signale eines Modifikationsbefehls durch Änderung der Mikrotask-Signale eingerichtet, die als Antwort auf dieses Initialisierungs-Ausführungssignal erzeugt werden.

2. Datenverarbeitungssystem nach Anspruch 1, dadurch gekennzeichnet, daß jeder einzelne Befehl der Befehlsfolge des Programm-Steuercomputers (2) einem Befehlscomputer in dieser Reihe (4) zugewiesen wird, und daß jeder dieser Befehlscomputer in der Reihe (4) eine programmierbare Befehls-Dekodierungseinheit (16) zum Empfang dieses Initialisierungs-Ausführungssignal, das durch jeden einzelnen zugewiesenen Befehl ausgelöst wird, und zur Beantwortung durch Erzeugung von Mikrotask-Signalen aufweist, wobei die Mikrotask-Signale die Tasks einleiten, die zur Ausführung des einzelnen zugewiesenen Befehls benötigt werden; jede programmierbare Befehls-Dekodierungseinheit (16) ist weiterhin zum Antworten auf Signale eines Modifikationsbefehls durch Änderung der Mikrotask-Signale eingerichtet, die als Antwort auf dieses Initialisierungs Ausführungssignal erzeugt werden.

3. Datenverarbeitungssystem nach Anspruch 1 oder 2, dadurch gekennzeichnet, daß der Programm-Steuercomputer (2) Einheiten aufweist, die für die Initialisierung des Systems durch Erzeugung einer Gruppe von Folgen von vorher festgelegten Signalen von Modifikationsbefehlen und zum Übertragen einer der Folgen von Signalen von Modifikationsbefehlen an die programmierbare Befehls-Dekodierungseinheit (16) in jedem Befehlscomputer in der Reihe (4) verantwortlich ist, und zwar zum Einrichten von Initialisierungs-Mikrotask-Signalen, die in Abhängigkeit von diesem Initialisierungs-Ausführungssignal erzeugt werden, das diesen einzelnen Befehl vertritt, der jedem Befehlscomputer zugewiesen ist.

4. Datenverarbeitungssystem nach Anspruch 1, 2 oder 3, dadurch gekennzeichnet, daß jeder Befehlscomputer eine Rückkopplungseinheit zur selektiven Beantwortung auf Zwischenergebnisse, die während der Ausführung eines Befehls anfallen, und zur Abgabe von Signalen eines Modifikationsbefehls an die programmierbare Befehls-Dekodierungseinheit (16) aufweist, die Mikrotask-Signale in Abhängigkeit von dem Initialisierungs-Ausführungssignal abgibt, die während der Befehlsausführung geändert werden.

5. Datenverarbeitungssystem nach einem der Ansprüche 1 bis 4, dadurch gekennzeichnet, daß ein Hauptspeicher (3) vorgesehen ist, in dessen Verbindungen (11) ein Bus-System enthalten ist, bei dem der Programm-Steuercomputer (2), der Hauptspeicher (3) und jeder Befehlscomputer Zugriff zu dem Bus-System haben, um untereinander zu kommunizieren.

6. Datenverarbeitungssystem mit folgenden Merkmalen:

(A) mit einer Mehrzahl von Programm-Steuercomputern (26), die jeweils Einheiten zum Koordinieren und Ausführen von Befehlen während eines Programmablaufs durch Erkennung jedes Befehls in einer Befehlsfolge eines programm-Steuercomputers aufweisen;

(B) mit einem übergeordneten Computer;

(C) mit einer Mehrzahl von Reihen von Befehlscomputern (27), wobei jede Reihe von Befehlscomputern (27) eine Vielzahl von Befehlscomputern aufweist und jeder Befehlscomputer in jeder Reihe (27) so ausgebildet ist, daß er einen Befehl in der Befehlsfolge von mindestens einem der Programm-Steuercomputer (26) auszuführen in der Lage ist;

(D) mit einer Vielzahl von Speichern (28);

(E) mit einem Bus-System (29), welches die Programm-Steuercomputer (26), den übergeordneten Computer, die Speicher und die Befehlscomputer zur Kommunikation untereinander verbindet;

(F) die Einheiten zum Koordinieren und Ausführen von Befehlen, die in einem der Programm-Steuercomputer (26) beinhaltet sind, sind so ausgebildet, daß sie ein Initialisierungs-Ausführungssignal, welches durch einen erkannten Befehl ausgelöst wird, zu einem dieser Befehlscomputer sendet, der bestimmt wurde, diesen erkannten Befehl aus der Befehlsfolge des ausgewählten Programm-Steuercomputers (26) auszuführen;

(G) mit einer programmierbaren Befehls-Dekodierungseinheit in jedem Befehlscomputer zum Empfang und zur Ausführung des Initialisierungs-Ausführungssignals, welches durch einen erkannten Befehl in der Befehlsfolge des gewählten Programm-Steuercomputers (26) ausgelöst wird, und zur Beantwortung durch Erzeugung von Mikrotask-Signalen, die Tasks einleiten, die zur Ausführung eines Befehls benötigt werden; die programmierbare Befehls-Dekodierungseinheit ist weiterhin zum Antworten auf Signale eines Modifikationsbefehls durch Änderung der Mikrotask-Signale eingerichtet, die als Antwort auf dieses Initialisierungs-Ausführungssignal erzeugt werden.

7. Datenverarbeitungssystem nach Anspruch 6, dadurch gekennzeichnet, daß der übergeordnete Computer einer der Programm-Steuercomputer (26) ist, der wahlweise festgelegt wird.

8. Datenverarbeitungssystem nach Anspruch 6 oder 7, dadurch gekennzeichnet, daß jeder Befehlscomputer eine Rückkopplungseinheit zur selektiven Beantwortung auf Zwischenergebnisse, die während der Ausführung eines Befehls anfallen, und zur Abgabe von Signalen eines Modifikationsbefehls an die programmierbare Befehls-Dekodierungseinheit (16) aufweist, die Mikrotask-Signale in Abhängigkeit von dem Initialisierungs-Ausführungssignal abgibt, die während der Befehlsausführung geändert werden.

**Revendications**

1. Système de traitement de données comprenant:

(A) un ordinateur (2) de commande de programme, ledit ordinateur de commande de programme comportant des moyens (14) de coordination de l'exécution des instructions en vue d'identifier chacune des instructions d'un jeu d'instructions dudit ordinateur (2) de commande de programme lorsqu'un programme est exécuté;

(B) une banque (4) d'ordinateurs d'instructions (5, 6, 7, 8, 10), chaque ordinateur d'instructions de ladite banque (4) étant affecté à l'exécution d'une des instructions du jeu d'instructions dudit ordinateur (2) de commande de programme;

(C) des moyens de liaison (11) reliant ledit ordinateur (2) de commande de programme et chaque ordinateur d'instruction de ladite banque (4), en vue de les faire communiquer entre eux;

caractérisé en ce que

(D) ledit moyen (14) de coordination d'exécution des instructions inclus dans ledit ordinateur de commande programme (2) est apte à transférer un signal d'exécution initial représentant une instruction identifiée jusqu'à l'un desdits ordinateurs de commande qui a été affecté à l'exécution de l'instruction identifiée faisant partie du jeu d'instructions dudit ordinateur de commande de programme (2); et

(E) qu'un moyen (16) de décodage d'instructions programmable est inclus dans au moins l'un desdits ordinateurs d'instructions, en vue de recevoir un signal initial d'exécution représentant une instruction identifiée faisant partie du jeu d'instructions dudit ordinateur de commande de programme (2) et pour répondre à celui-ci en émettant des signaux de micro-tâches représentant les tâches qui sont nécessaires pour exécuter l'instruction, ledit moyen (16) de décodage d'instruction programmable étant en outre apte à réagir aux signaux de modification d'instructions qui lui sont appliqués en modifiant les signaux de micro-tâches qui sont émis par celui-ci en réponse audit signal d'exécution initial.

2. Système de traitement de données selon la revendication 1, caractérisé en ce que chaque instruction individuelle du jeu d'instructions dudit ordinateur (2) de commande de programme est affectée à un ordinateur d'instructions de ladite banque (4), et dans lequel chacun desdits ordinateurs d'instructions de ladite banque (4) comprend des moyens (16) de décodage d'instructions programmable en vue de recevoir ledit signal initial d'exécution représentant ladite instruction individuelle ainsi affectée; chacun desdits moyens (16) de décodage d'instructions programmable étant en outre apte à répondre aux signaux de modification d'instructions qui leurs sont appliqués, en faisant varier les signaux de micro-tâches qu'ils émettent en réponse audit signal d'exécution initial.

3. Système de traitement de données selon la revendication 1 ou 2, caractérisé en ce que ledit ordinateur (2) de commande de programme comprend des moyens destinés à répondre à l'initialisation du système en émettant un groupe de jeux de signaux de modification d'instructions prédéterminés et en transférant un jeu prédéterminé desdits jeux de signaux de modification d'instructions audit moyen (16) de décodage d'instructions programmable de chacun desdits ordinateurs d'instructions de ladite banque (4), en vue de déterminer les signaux de micro-tâches initiaux qui seront de ce fait générés, en réponse audit signal d'exécution initial représentant ladite instruction unique affectée à chacun desdits ordinateurs d'instructions.

4. Système de traitement de données selon la revendication 1, 2 ou 3, caractérisé en ce que chacun desdits ordinateurs d'instructions comprend des moyens de réaction en vue de répondre sélectivement aux résultats intermédiaires obtenus au cours de l'exécution d'une instruction en vue d'émettre des signaux de modification des instructions à destination dudit moyen (16) de décodage d'instructions programmable qu'il contient, les signaux de micro-tâches engendrés par ledit moyen (16) de décodage d'instructions programmable, en réponse audit signal initial d'exécution de programme, étant modifiés au cours de l'exécution de l'instruction.

5. Système de traitement de données selon l'une quelconque des revendications 1 à 4, caractérisé par une mémoire principale (3) du système, dans laquelle ledit moyen d'accouplement (11) comprend un système de bus et dans lequel ledit ordinateur (2) de commande de programme, ladite mémoire principale (2) du système et chacun desdits ordinateurs d'instructions ont accès audit système de bus (11) afin de communiquer entre eux.

6. Système de traitement de données comprenant:

(A) une pluralité d'ordinateurs de commande de programme, chacun desdits ordinateurs de commande de programme comportant des moyens de coordination de l'exécution des instructions destinés à identifier chaque instruction faisant partie d'un jeu d'instructions dudit ordinateur de commande de programme, lors de l'exécution d'un programme;

(B) un ordinateur de supervision;

(C) une pluralité de banques d'ordinateurs d'instructions, chacune desdites banques d'ordinateurs d'instructions comprenant une pluralité d'ordinateurs d'instructions, chaque ordinateur d'instructions de chacune desdites banques étant affecté à l'exécution d'une des instructions faisant partie du jeu d'instructions d'au moins un desdits ordinateurs de commande de programme;

(D) une pluralité de mémoires de système;

(E) un système de bus reliant lesdits ordinateurs de commande de programme, ledit ordinateur de supervision, lesdites mémoires de système et lesdits ordinateurs d'instructions afin de les faire communiquer entre eux;

(F) ledit moyen de coordination de l'exécution des instructions inclus dans un ordinateur considéré parmi lesdits ordinateurs de commande de programme étant apte à transférer un signal d'exécution initial représentant une instruction identifiée, à l'un desdits ordinateurs d'instructions qui a été affecté à l'exécution de l'instruction identifiée, faisant partie du jeu d'instructions dudit ordinateur considéré parmi lesdits ordinateurs de commande de programme; et

(G) des moyens de décodage d'instructions programmable, inclus dans chacun desdits ordinateurs d'instructions, en vue de recevoir ledit signal d'exécution initial représentant une instruction identifiée appartenant au jeu d'instructions dudit ordinateur considéré parmi lesdits ordinateurs de commande de programme, qu'il s'agit d'exéter, et en vue de réagir à celui-ci en émettant des signaux de micro-tâches représentatifs des tâches nécessaires pour l'exécution de l'instruction, lesdits moyens de décodage d'instructions programmables étant en outre aptes à réagir aux signaux de modification des instructions qui leur sont appliqués en faisant varier les signaux de micro-tâches qu'ils émettent en réponse audit signal d'exécution initial.

7. Système de traitement de données selon la revendication 6, caractérisé en ce que ledit ordinateur de supervision est un ordinateur choisi parmi lesdits ordinateurs (26) de commande de programme.

8. Système de traitement de données selon la revendication 6 ou 7, caractérisé en ce que chacun desdits ordinateurs d'instructions comprend des moyens de réaction destinés à répondre sélectivement aux résultats intermédiaires obtenus pendant l'exécution d'une instruction en vue d'émettre des signaux de modification d'instructions à destination dudit moyen de décodage d'instructions programmable, les signaux de micro-tâches émis par ledit moyen de décodage d'instructions programmable en réponse audit signal d'exécution initial, sont modifiés lors de l'exécution de l'instruction.

*Fig-1*

*Fig-3*

SYSTEM MAIN MEMORY 3

INPUT 1A

OUTPUT 1B

OPERATOR'S CONSOLE 1C

PROGRAM CONTROL COMPUTER 2

INSTRUCTION & OPERAND REGISTER (S) 12

INSTRUCTION EXECUTION COORDINATING UNIT 14

ARITHMETIC & LOGIC UNIT 13

BUS SYSTEM 11

INSTRUCTION COMPUTER 00 5

INSTRUCTION COMPUTER 01 6

INSTRUCTION COMPUTER 02 7

INSTRUCTION COMPUTER 03 8

INST. COMP. n 10

INSTRUCTION ASSIGNMENT AND OPERAND REGISTER (S) 15

FROM PCC
FROM SYSTEM MEMORY
FROM CONSOLE

PROGRAMMABLE INSTRUCTION DECODING 16

INSTRUCTION MICROTASK GENERATOR 17

ARITHMETIC AND LOGIC UNIT 18

STATUS 20

INTERNAL MEMORY 19

Fig. 2

2